# EUROPÄISCHE PATENTSCHRIFT

(11) **EP 1 192 607 B1**
(45) Veröffentlichungstag und Bekanntmachung des Hinweises auf die Patenterteilung: **02.01.2003**
(21) Anmeldenummer: 00951253.4
(22) Anmeldetag: 06.07.2000
(51) Int. Cl.: G07F 7/10

(54) **MOBILTELEFON**
MOBILE PHONE
TELEPHONE MOBILE

(30) Priorität: 06.07.1999 DE 19931076
(43) Veröffentlichungstag der Anmeldung: 03.04.2002
(73) Patentinhaber: GSI Gesellschaft für Systemtechnik und Informatik mbH, 88682 Salem (DE)
(72) Erfinder: DÜNHAUPT, Rolf, D-88682 Salem (DE); STORCK, Bruno, D-88682 Salem (DE)
(74) Vertreter: Roth, Klaus
(86) Internationale Anmeldenummer: DE0002165
(87) Internationale Veröffentlichungsnummer: WO01003082

(56) Entgegenhaltungen:
- EP-A- 0 886 246
- WO-A-99/08238
- DE-A- 19 706 174
- FR-A- 2 771 205

## Beschreibung

Die Erfindung betrifft ein Mobiltelefon mit einer Schnittstelle zu einem elektronischen Datennetz nach dem Oberbegriff des Anspruchs 1.

Der Zugang in elektronische Datennetze, beispielsweise ins Internet mittels eines Mobiltelefons ist bereits Stand der Technik. Mobiltelefone umfassen in der Regel eine Leseeinheit zum Auslesen eines Freischaltelementes, das üblicherweise als Chipkarte ausgebildet ist. Darüber hinaus wird im Internet ein Zahlungsdienst angeboten, um beim Einkaufen bargeldlos mit Hilfe eines Mobiltelefons zu bezahlen. Hierbei wird das Mobiltelefon als Eingabeeinheit benutzt, um entsprechende Buchungen auf einem über das Internet erreichbaren Rechner zu veranlassen. Das Bezahlen findet dabei so statt, dass der Käufer eine Zahlungsoption im Internet auswählt und seine Mobiltelefonnummer einem Buchungsrechner übergibt. Anschließend schickt der Verkäufer die gewünschte Transaktion über eine sichere Datenverbindung zu dem Buchungsrechner, der den Käufer unter der angegebenen Nummer zurückruft. Nun gibt der Käufer die Transaktion durch Eingabe einer sogenannten PIN (Personal-Identity-Number) frei. Über den genannten Rechner wird der angegebene Betrag per Lastschriftverfahren eingezogen und an den Internet-Händler weitergeleitet.

Bei diesem Verfahren der bargeldlosen Bezahlung mit Hilfe des Mobiltelefons muss die PIN über das Funktelefon sowie über die entsprechende Internetverbindung eingegeben werden. Hierin besteht ein gewisses Sicherheitsrisiko.

Die FR 2 771 205 A zeigt ein Mobiltelefon, das neben der eigentlichen Leseeinheit für die Freischaltkarte des Mobiltelefons über eine weitere Lese- und/oder Schreibeinheit verfügt, welche für den zeitlich parallelen Einsatz einer weiteren Chipkarte zum Ermöglichen weiterer, zusätzlicher Anwendungen bereit steht.

Aufgabe der Erfindung ist es demgegenüber, eine Vorrichtung vorzuschlagen, die einen höhere Sicherheit gewährleistet. Weiterhin ist es Aufgabe der Erfindung, mit Hilfe eines Mobiltelefons nicht nur eine bargeldlose Zahlung, sondern auch eine Buchung und gegebenenfalls eine Kontrolle zur Inanspruchnahme von beliebigen Leistungen z.B. dem Besuch von Veranstaltungen, Einrichtungen, usw. zu ermöglichen.

Diese Aufgabe wird ausgehend von einem Mobiltelefon der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Mobiltelefon dadurch aus, dass neben der Leseeinheit für ein Freischaltelement eine Lese- und/oder Schreibeinheit für ein elektronisches Speichermedium zur Realisierung weiterer Funktionen vorgesehen ist. Über eine solche Lese- und/oder Schreibeinheit kann zum einen ein höherer Sicherheitsstandard für den bargeldlosen Zahlungsverkehr erreicht werden. Das elektronische Medium kann beispielsweise entsprechend kodierte Daten aufweisen, die in einer Interaktion mit einem entsprechendem Rechner zusätzlich oder unabhängig von einer PIN die Identifizierung des Teilnehmers ermöglichen. Darüber hinaus kann ein solches elektronisches Speichermedium in einer besonderen Ausführungsform auch beschrieben werden und somit zusätzliche Funktionen, z.B. als netzunabhängiger Autorisierungsnachweis, als Guthabenträger usw. erhalten.

Ein solcher netzunabhängiger Autorisierungsnachweis, der beispielsweise nach einer erfolgreich stattgefundenen bargeldlosen Bezahlung mittels dem elektronischen Speichermediums durch Beschreiben des Speichermediums, erzeugt wird, kann sodann beispielsweise als Eintrittsticket bei einer Veranstaltung verwendet werden. Hierzu kann das elektronische Speichermedium in einer bestimmten Ausführungsform aus dem Mobiltelefon entnommen und über eine entsprechend ausgebildete Kontrolleinheit, die in diesem Fall keine Verbindung zum Datennetz aufweisen muss, vor Ort, beispielsweise an einer Zugangsschranke kontrolliert werden.

In einer weiteren Ausführurigsform der Erfindung wird eine Autorisierungskontrolle mit Hilfe eines erfindungsgemäßen Mobiltelefons durchführbar. Somit wäre der Einsatz eines Mobiltelefons denkbar, bei dem zum einen eine gebührenpflichtige Leistung unmittelbar über das Telefon gebucht und die Autorisierungsfreigabe mit Hilfe der auf dem zugehörigen elektronischen Speichermedium gespeicherten Daten erzeugt wird und zum anderen eine Autorisierung kontrolliert werden kann.

So kann z.B. in der vorgeschriebenen Vorgehensweise ein durch einen entsprechenden Autorisierungseintrag über die Netzverbindung in einem Buchungsrechner oder unmittelbar auf dem Speichermedium erzeugter virtueller Fahrschein für ein öffentliches Verkehrsmittel bezahlt und erstellt werden. Im Falle einer Kontrolle in dem entsprechenden Verkehrsmittel kann nun das elektronische Speichermedium über ein entsprechendes Telefon der Kontrollperson ausgelesen werden. Hierzu kommen beispielsweise standardisierte drahtlose Schnittstellen zwischen den Mobiltelefonen in Frage. Es könnte jedoch ebenfalls das elektronische Speichermedium manuell mit dem Mobiltelefon der Kontrollperson verbunden, z. B. eingesteckt werden, so dass dort die entsprechende Autorisierungskontrolle stattfindet. Hierzu kann über das Kontrolltelefon beispielsweise ein entsprechender Rechner, in dem die Autorisierungskontrolle gespeichert ist, angerufen und ein Vergleich mit den auf dem elektronischen Speichermedium gespeicherten Daten stattfinden oder in einer anderen Ausführung die durch einen entsprechenden Eintrag unmittelbar auf dem elektronischen Speichermedium befindliche Autorisierung abgefragt.

Erfindungsgemäße Mobiltelefone können somit eine Vielzahl spezieller Kontrollgeräte ersetzen. Hierdurch wird die Organisation von Veranstaltungen, Freizeitanlagen, Transportmitteln, usw. erheblich vereinfacht. Die entsprechenden Vorgänge bezüglich Autorisierung bargeldlose Zahlungs- sowie die vorgesehenen Kontrollalgorithmen müssen hierzu lediglich auf einem entsprechendem Rechner des verwendeten Datennetzes installiert werden und können anschließend über die Mobiltelefone sowohl zur Buchung, zur Zahlung, zur Erzeugung der Autorisierung und zur Kontrolle der Autorisierung verwendet werden.

In einer weiteren Ausführungsform der Erfindung wird das Mobiltelefon und/oder das elektronische Speichermedium mit einer zusätzlichen drahtlosen Schnittstelle versehen, mittels der ein Datenaustausch, z.B. mit einer Kontrolleinheit stattfinden kann. Eine solche drahtlose Schnittstelle kann beispielsweise auch dadurch realisiert werden, dass mit Hilfe des Funktelefonnetzes die Kontrolleinheit angewählt und anschließend ein Datenaustausch stattfindet. Es könnte jedoch auch eine separate drahtlose Schnittstelle vorgesehen werden.

Weiterhin ist mit Hilfe einer Schreibeinheit das elektronische Medium beispielsweise als Guthabenträger zu verwenden, indem über eine bargeldlose Transaktion ein gewisser Betrag auf das Speichermedium geladen wird. Im Anschluss hieran kann in entsprechenden Kaufaktionen der auf dem Speichermedium gespeicherte Guthabenbetrag genutzt werden. Die Abbuchung von dem Speichermedium kann wiederum durch manuelle Entnahme des Speichermediums aus dem Mobiltelefon und anschließender Verbindung mit einer Kontrolleinheit stattfinden oder aber auch über eine drahtlose Schnittstelle der vorbeschriebenen Weise.

Bei einer Verwendung des Speichermediums als Guthabenträger erhält dieses Speichermedium die Funktion einer üblichen Geldkarte, d.h. einer Chipkarte, auf der ein bestimmter Guthaben-Betrag gespeichert ist. Derartige Geldkarten sind bereits für den bargeldlosen Zahlungsverkehr in Gebrauch und weisen einen vergleichsweise hohen Sicherheitsstandard auf, da bei Verlust der Karte maximal der geladene Betrag verloren werden kann. Eine solche Geldkarte ersetzt gewissermaßen die Funktion einer Geldbörse.

Weiterhin kann mit Hilfe eines erfindungsgemäßen Telefons ein System geschaffen werden, das es erlaubt, Guthabenträger nicht nur von einem Telefon aus zu laden, sondern auch gewünschte Beträge abzubuchen. Hierdurch können die entsprechenden Endterminals in Einzelhandelsgeschäften zur Bezahlung von Beträgen mit Hilfe derartiger Guthabenträger entfallen und es wird auch ein mobiler Einsatz für einen Verkäufer beispielsweise beim Fahrkartenverkauf in einem öffentlichen Verkehrsmittel oder dergleichen, auf Jahrmärkten, Wochenmärkten, usw. möglich.

Um das Konto, auf das ein entsprechender Betrag gebucht werden soll, bei einem entsprechenden Rechner zu identifizieren, kann beispielsweise in zeitlicher Reihenfolge zunächst das als Identifizierungsnachweis dienende speichermedium eines Verkäufers und anschließend ein Guthabenträger eines Käufers ausgelesen werden, wobei über die Tastatur des Telefons die gewünschten Beträge oder sonstige Angaben eingegeben werden können. In einer besonderen Ausführungsform der Erfindung kann in einem solchen Fall der Inhaber der Freischaltkarte für das Mobiltelefon standardmäßig als Empfänger für entsprechend abzubuchender Beträge vorgesehen werden.

Ein erfindungsgemäßer Guthabenträger kann beispielsweise auch so ausgebildet werden, dass er sowohl in erfindungsgemäßen Mobiltelefonen als auch in bekannten Terminals verwendbar ist. So ist es in dieser Ausführungsform der Erfindung möglich, beispielsweise eine Geldkarte mit Hilfe eines mitgeführten Mobiltelefons aufzuladen und diese anschließend in einem Einzelhandelsgeschäft mit herkömmlichem Geldkartenterminal zu verwenden. Auch der Einsatz als Telefonkarte oder dergleichen kann bei entsprechender Ausgestaltung des erfindungsgemäßen Mobiltelefons ermöglicht werden.

Als Speichermedium kommen beispielsweise Chip- oder Magnetkarten in Frage. Auch weitere bekannte Speichermedien, wie Memory-Sticks, Mini-Disks usw. können hierfür verwendet werden. Auch künftige Datenträger mit ähnlicher Funktion kommen für die Realisierung der Erfindung in Betracht.

In einer vorteilhaften Ausführungsform der Erfindung werden Daten zur Bestimmung der Benutzeridentität auf dem Datenträger gespeichert. Das Speichermedium ist in diesem Fall nicht nur zur Erzeugung eines Autorisierungsnachweises, sondern auch für eine elektrische Signatur verwendbar, so wie bereits Chipkarten für bargeldlose Zahlungstransaktionen in Gebrauch sind, die die manuelle Unterschrift eines Zeichnungsberechtigten ersetzen.

Diese Daten zum Nachweis der Benutzeridentität können beispielsweise kombiniert werden mit Daten, die die Autorisierung zur Benutzung bestimmter Leistung, beispielsweise des Zutritts zu einer Veranstaltung, eines öffentlichen Verkehrsmittels, usw. bewirken. Dies ist insbesondere dort vor Vorteil, wo personenabhängige Gebühren für die entsprechende Leistung entrichtet werden müssen und somit zusätzlich zu einem '"virtuellen Ticket" auch eine Personenkontrolle erforderlich ist.

Das erfindungsgemäße Speichermedium kann ohne weiteres weitere Funktionen erfüllen, beispielsweise als Personalausweis, als Versicherungsnachweis, als Führerschein, als Kreditkarte, usw. Die Einsatzmöglichkeiten eines erfindungsgemäßen Mobiltelefons werden hierdurch wesentlich vielfältiger.

So kann beispielsweise bei einer Ausbildung des Speichermediums als Kreditkarte jeder Besitzer eines entsprechenden erfindungsgemäßen Mobiltelefons eine Transaktion vornehmen, bei dem der registrierte Inhaber des Speichermediums, das von dem erfindungsgemäßen Telefon ausgelesen wird, mit dem entsprechenden Betrag belastet wird. Das Mobiltelefon kann dementsprechend die bisherigen Leseterminals für Kreditkarten ersetzen, die in den Einzelhandelsgeschäften vorhanden sind. Zum einen ergibt sich hierdurch eine Verminderung des Aufwands im Betrieb eines Kreditkartensystems (oder eines Kreditsystems mit sonstigen Datenträgern), wobei zudem auch ein mobiler Einsatz, beispielsweise beim Fahrkartenverkauf in einem öffentlichen Verkehrsmittel oder dergleichen, auf Jahrmärkten, Wochenmärkten, usw. unter Benutzung eines erfindungsgemäßen Telefons möglich ist.

In einer besonderen Weiterbildung der Erfindung wird das elektronische Speichermedium zugleich mit der Funktion der Freischaltkarte des Telefons versehen. Dies ist insbesondere dann problemlos möglich, wenn das Speichermedium, wie oben angeführt, zugleich als Mittel zur Personenidentifikation dient, d.h. als elektronische Signatur verwendbar ist. Auch ohne diese Funktion kann ein erfindungsgemäßes elektronisches Speichermedium mit der Freischaltkartenfunktion verbunden werden, sofern ein bestimmtes Konto, auf dem die Telefongebühren abzubuchen sind, über das elektronische Speichermedium dem Betreiber des Funktelefonnetzes zuverlässig zum Abbuchen der fälligen Rechnungsbeträge zur Verfügung gestellt wird. Die erfindungsgemäße Lese-/Schreibeinheit kann dabei auch für die Freischaltung herangezogen werden.

Darüber hinaus kann ein elektronisches Speichermedium gemäß der Erfindung auch frei belegbare Speicherkapazität aufweisen. Auf diese Weise können beliebige Daten beispielsweise von dem Internet zur weiteren Verwendung auf das Speichermedium heruntergeladen und später wieder verwendet werden. So sind beispielsweise bereits jetzt Entwicklungen öffentlich diskutiert worden, bei denen das Mobiltelefon über einen Memory-Stick als Musikabspielgerät, d.h. als sogenannter Walkman dient wobei dieser Memory-Stick in der bekannten Ausführung von einer Musikanlage geladen wird. Diese und weitere Funktionen wären ohne weiteres mit einem erfindungsgemäßen Mobiltelefon kombiniert realisierbar.

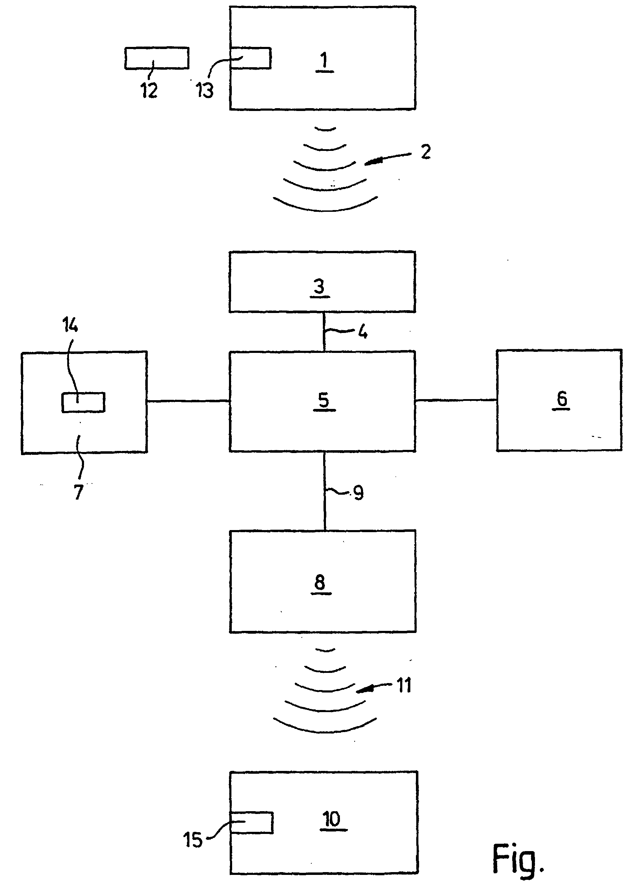

Ein Ausführungsbeispiel der Erfindung ist in der Zeichnung dargestellt und wird anhand der Figuren nachfolgend näher erläutert.

Die einzige Figur zeigt ein schematisches Blockdiagramm einer bestimmten Ausführungsform der Verwendung eines erfindungsgemäßen Mobiltelefons.

Das Mobiltelefon 1 steht über eine drahtlose Funkstrecke 2 mit einer Sende- und Empfangsstation 3 eines Funktelefonnetzes in Verbindung. Diese Sende- und Empfangsstation 3 stellt über die Leitung 4 eines Festtelefonnetzes die Verbindung zu einem Datennetz, beispielsweise dem Internet 5 her. Im Internet 5 ist als Teilnehmer ein Buchungsrechner 6 installiert. Über das Internet 5 kann der Buchungsrechner 6 mit einer Kontrolleinheit 7 in Verbindung treten. Weiterhin ist eine von der Sende- und Empfangsstation 3 verschiedene Sende- und Empfangsstation 8 über die Leitung 9 mit dem Internet verbunden. Über die Sende- und Empfangsstation 8 kann der Internetzugang eines weiteren Mobiltelefons 10 über eine drahtlose Funkstrecke 11 stattfinden. Ein elektronisches Speichermedium in Form einer Chipkarte 12 ist vor der Lese-/Schreibeinheit 13 des Mobiltelefons 1 angeordnet. Auch die Kontrolleinheit 7 sowie das Mobiltelefon 10 sind mit Lese-/Schreibeinheiten 14, 15 versehen.

Die schematisch dargestellte Vorrichtung kann nunmehr in der folgenden Weise verwendet werden Die Chipkarte 12 wird zunächst in die Lese-/Schreibeinheit 13 des Mobiltelefons 1 eingeführt. Anschließend wird eine Verbindung über die Sendeund Empfangsstation 3 und das Internet 5 zum Buchungsrechner 6 aufgebaut. Dies kann in der bereits bekannten Art und Weise sogenannter WAP-Handys vorgenommen werden.

Nunmehr wird im Buchungsrechner 6 eine bestimmte Leistung, beispielsweise der Zugang in ein Freizeitgelände oder Fußballstadion, ein Theater, eine Hotelübernachtung, ein Fahrschein, eine Skiliftkarte, usw. gebucht. Die Buchung sowie der hierzu erforderliche bargeldlose Zahlungsverkehr kann unter Benutzung bekannte Routinen mit entsprechenden Sicherheitsstandards vorgenommen werden, wobei die Chipkarte 12 entsprechend auszubilden ist. Der Sicherheitsstandard kann beliebig hoch angesetzt werden, so dass beispielsweise die Chipkarte 12 auch für eine sogenannte elektronische Signatur für Geschäfte jedweder Art mit den in Bankgeschäften gängigen Sicherheitsstandards oder künftigen Sicherheitsstandards verwendbar ist.

Nach der erfolgten Bezahlung, auf deren Verlauf an dieser Stelle nicht näher eingegangen wird, kann über den Buchungsrechner 6 oder weitere zugeschaltete Recheneinheiten ein Autorisierungsnachweis kreiert werden, indem entsprechende Autorisierungsdaten auf dem Buchungsrechner oder auf der Chipkarte 12 abgelegt werden. Es ist nicht unbedingt erforderlich, zur Erzeugung eines Autorisierungsnachweises Daten auf der Chipkarte 12 abzulegen, da die von der Chipkarte 12 ausgelesenen Daten zur Erzeugung der Autorisierung im Buchungsrechner 6 bzw. den sonstigen zugeschalteten Rechnersystemen verwendet werden können.

In jeden Fall ist eine Kontrolle, beispielsweise am Eingangstor eines Geländes, wie einem Fußballstadion oder dergleichen möglich, indem die Chipkarte 12 in die Lese-/Schreibeinheit 14 der Kontrolleinheit 7 vor Ort eingesteckt wird. Die Kontrolleinheit 7 ist hierdurch in der Lage, die Autorisierung über das Internet 5 in dem Buchungsrechner 6 oder den genannten zugeschalteten Rechnersystemen zu kontrollieren.

Sofern keine Autorisierungsdaten auf die Chipkarte 12 geschrieben wurden, ist diese Verbindung der Kontrolleinheit mit dem Buchungsrechner 6 bzw. mit den zugeschaltenen Rechnersystemen zwingend erforderlich, da die Freigabe der Autorisierung nicht auf der Chipkarte 12 abgefragt werden kann. Sofern der Autorisierungsnachweis in Form geschriebener Daten auf der Chipkarte 12 abgelegt wurde, so ist es nicht mehr zwingend erforderlich, dass die Kontrolleinheit 7 mit dem Internet 5 und somit mit dem Buchungsrechner 6 bzw. weiteren Recheneinheiten in Verbindung steht. In diesem Fall ist ein Auslesen der Chipkarte 12 an einem lokalen Lesegerät ausreichend.

Das Mobiltelefon 10 mit seiner Lese-/Schreibeinheit, das technisch identisch mit dem Mobiltelefon 1 ausgebildet sein kann, erfüllt für die Kontrolle der Autorisierung die gleiche Funktion wie die Kontrolleinheit 7. Hierbei ist jedoch der zusätzliche Vorteil der Mobilität gegeben. Auch hier ist die Verbindung zum Internet 5 nur dann erforderlich, wenn keine Autorisierungsdaten auf der Chipkarte 12 abgelegt wurde. Sofern der Autorisierungsnachweis durch Beschreiben der Chipkarte 12 erzeugt wurde, kann die Kontrolle auch ohne Verbindung des Mobiltelefons 10 zum Internet 5, beispielsweise bei schlechtem Empfang in einem Tunnel usw. vorgenommen werden.

Der gleiche schematische Aufbau kann herangezogen werden, um beispielsweise eine Geldkarte mit Hilfe eines erfindungsgemäßen Mobiltelefons 1 zu nutzen. Die Chipkarte 12 umfasst in diesem Fall die Funktion der Geldkarte. Sie kann über das Mobiltelefon 1 durch Beschreiben geladen werden, wobei wie im vorbeschriebenen Ausführungsbeispiel die Bezahlung der Buchung bargeldlos erfolgt. Nach dem Laden der Chipkarte 12 kann diese als Geldkarte benützt werden. So kann die Kontrolleinheit 7 für dieses Anwendungsbeispiel ein Geldkartenterminal eines Einzelhandelsgeschäfts darstellen. Für eine entsprechende Transaktion wird die als Geldkarte dienende Chipkarte 12 in die Kontrolleinheit 7 eingeführt und der entsprechende Betrag und sonstige Eingaben über nicht näher dargestellte Bedienelemente eingegeben. Die Abbuchung auf das gewünschte Konto erfolgt über das Internet 5 (wobei anstelle des Internets 5 auch weitere, insbesondere künftige Datennetze verwendbar sind) und den Buchungsrechner 6 mit Hilfe bekannter Abläufe zum bargeldlosen Zahlungsverkehr.

Darüber hinaus ist nunmehr mit Hilfe des Mobiltelefons 10 ein universell einsetzbares, mobiles Geldkartenterminal gegeben, über das in gleicher Weise die gewünschten Beträge von der Geldkarte abgebucht werden können. Diese Funktion kann jedes entsprechend ausgebildete erfindungsgemäße Mobiltelefon übernehmen. Wie bereits oben erwähnt, können die Mobiltelefone 1 und 10 ohne weiteres technisch identisch ausgebildet sein.

Die Kommunikation zwischen der Chipkarte 12 bzw. dem elektronischen Speichermedium allgemein und der Lese-/Schreibeinheit 13, 14, 15 der zugehörigen Mobiltelefone 1, 10 bzw. Kontrolleinheit 7 muss nicht zwangsläufig durch manuelles Einführen des Speichermediums erfolgen. Es sind hierfür beispielsweise auch drahtlose Verbindungswege denkbar. In diesem Ausführungsbeispiel wäre es auch ohne weiteres denkbar, dass das Speichermedium, beispielsweise in Form der Chipkarte 12 permanent in dem Mobiltelefon 1 des Benutzers verbleibt und über eine entsprechende Schnittstelle des Mobiltelefons den entsprechenden Datenaustausch mit der Kontrolleinheit 7 bzw. dem weiteren Mobiltelefon 10 vornimmt.

Mit Hilfe der Erfindung werden die Verwendungsmöglichkeiten eines Mobiltelefons vervielfacht. Das Telefon kann in diesem Fall als Medium zum bargeldlosen Zahlungsverkehr, als Geldkartenterminal, als mobiler Schalter für Fahrscheine, Tickets usw. sowie als Kontrolleinheit für Autorisierungen, Zahlungen usw. Verwendung finden. Die verschiedenen Verwendungsärten können dabei bei ein und derselben Geräteausstattung der Mobiltelefone durch entsprechende Programmierung eines oder mehrerer Rechnersysteme realisiert werden.

### Bezugszeichenliste:

- 1: Mobiltelefon
- 2: Funkstrecke
- 3: Sende- und Empfangsstation
- 4: Leitung
- 5: Internet
- 6: Buchungsrechner
- 7: Kontrolleinheit
- 8: Sende- und Empfangsstation
- 9: Leitung
- 10: Mobiltelefon
- 11: Funkstrecke
- 12: Chipkarte
- 13: Lese-/Schreibeinheit
- 14: Lese-/Schreibeinheit
- 15: Lese-/Schreibeinheit

## Patentansprüche

1. Vorrichtung zum bargeldlosen Zahlungsverkehr, bei der die elektronische Buchung von Leistungen vorgesehen ist, mit einem Mobiltelefon (1) mit einer drahtlosen Schnittstelle (2) zu einem elektronischen Datennetz (5), das für den bargeldlosen Zahlungsverkehr vorgesehen ist und eine Leseeinheit (13) für ein Freischaltelement (12) aufweist, wobei neben der Leseeinheit (13) für das Freischaltelement (12) eine weitere Lese- und/oder Schreibeinheit (7) für ein elektronisches Speichermedium (12) und ein Buchungsrechner (6) in dem Datennetz (5), vorgesehen sind **dadurch gekennzeichnet, dass** unter Verwertung von aus dem Speichermedium (12) mittels der weiteren Lese- und/oder Schreibeinheit (7) ausgelesenen Daten nach erfolgreicher Buchung einer gebührenpflichtigen Leistung die Erzeugung eines Autorisierungsnachweises zur Inanspruchnahme der Leistung vorgesehen ist.

2. Vorrichtung nach Anspruch 1, **dadurch gekennzeichnet,**
**dass** das elektronische Speichermedium (12) den Autorisierungsnachweis umfasst.

3. Vorrichtung nach einem der vorgenannten Ansprüche,
**dadurch gekennzeichnet, dass** das elektronische Speichermedium (12) eine Chipkarte, eine Magnetkarte, ein Memorystick und/oder eine Minidisk umfasst.

4. Vorrichtung nach einem der vorgenannten Ansprüche,
**dadurch gekennzeichnet, dass** das elektronische Speichermedium (12) als Guthabenträger vorgesehen ist.

5. Vorrichtung nach einem der vorgenannten Ansprüche,
**dadurch gekennzeichnet, dass** das Mobiltelefon (1) als mobile Kontrolleinheit zur Kontrolle von Autorisierungen mit Hilfe des elektronischen Speichermediums (12) ausgebildet ist.

6. Vorrichtung nach einem der vorgenannten Ansprüche,
**dadurch gekennzeichnet, dass** das Mobiltelefon (1) in Verbindung mit einem Buchungsrechner (6) zum Abbuchen von Beträgen von einem Guthabenträger ausgebildet ist.

7. vorrichtung nach einem der vorgenannten Ansprüche,
**dadurch gekennzeichnet, dass** das elektronische Speichermedium (12) zur Bestimmung der Benutzeridentität vorgesehen ist.

8. Vorrichtung nach einem der vorgenannten Ansprüche,
**dadurch gekennzeichnet, dass** in dem elektronischen Speichermedium (12) weitere Funktionen bekannter elektronischer Speichermedien integriert sind.

9. Vorrichtung nach einem der vorgenannten Ansprüche,
**dadurch gekennzeichnet, dass** das elektronische Speichermedium (12) zusätzlich als Kreditkarte ausgebildet ist.

10. Vorrichtung nach einem der vorgenanten Ansprüche,
**dadurch gekennzeichnet, dass** das elektronische Speichermedium (12) frei belegbare Speicherkapazitäten aufweist.

## Claims

1. Device for cashless payments, in which the electronic registration of services is provided, comprising a mobile telephone (1) with a wireless interface (2) to an electronic data network (5), provided for cashless payments and comprising a read unit (13) for a clearing element (12), a further read and/or write unit (7) for an electronic storage medium (12) and a charging computer (6) being provided in the data network (5) in addition to the read unit (13) for the clearing element (12), **characterised in that** after successfully registering for a service liable to a charge, proof of authorisation for using the service is provided by using data read out from the storage medium (12) by means of the further read and/or write unit (7).

2. Device according to claim 1, **characterised in that** the electronic storage medium (12) comprises the proof of authorisation.

3. Device according to any of the preceding claims,
**characterised in that** the electronic storage medium (12) comprises a chip card, a magnetic card, a memory stick and/or a mini disc.

4. Device according to any of the preceding claims, **characterised in that** the electronic storage medium (12) is provided as a credit carrier.

5. Device according to any of the preceding claims, **characterised in that** the mobile telephone (1) is designed as a mobile control unit for controlling authorisations with the aid of the electronic storage medium (12).

6. Device according to any of the preceding claims, **characterised in that** the mobile telephone (1) is designed in conjunction with a registration computer (6) for debiting amounts from a credit bearer.

7. Device according to any of the preceding claims, **characterised in that** the electronic storage medium (12) is provided to determine the user identity.

8. Device according to any of the preceding claims, **characterised in that** further functions of known electronic storage media are integrated in the electronic storage medium (12).

9. Device' according to any of the preceding claims, **characterised in that** the electronic storage medium (12) is additionally designed as a credit card.

10. Device according to any of the preceding claims, **characterised in that** the electronic storage medium (12) comprises storage capacities which can be freely occupied.

## Revendications

1. Dispositif pour le paiement sans espèces, dans lequel la comptabilisation électronique de prestations est prévue, comportant un téléphone mobile (1) ayant une interface sans fil (2) vers un réseau de données électronique (5), qui est prévu pour le paiement sans espèces et présente une unité de lecture (13) pour un élément de connexion (12), une autre unité de lecture et/ou d'écriture (7) pour un moyen de mémoire électronique (12) et un calculateur de comptabilisation (6) dans le réseau de données (5) étant prévus à côté de l'unité de lecture (13) pour l'élément de connexion (12),
**caractérisé en ce qu'**il est prévu d'engendrer une justification d'autorisation pour l'utilisation de la prestation en utilisant des données lues à partir du moyen de mémoire (12) au moyen de l'autre unité de lecture et/ou d'écriture (7) après comptabilisation réussie d'une prestation payante.

2. Dispositif selon la revendication 1,
**caractérisé en ce que** le moyen de mémoire électronique (12) comporte la justification d'autorisation.

3. Dispositif selon une des revendications précitées,
**caractérisé en ce que** le moyen de mémoire électronique (12) comporte une carte à puce, une carte magnétique, un bâtonnet à mémoire et/ou un minidisque.

4. Dispositif selon une des revendications précitées,
**caractérisé en ce que** le moyen de mémoire électronique (12) est prévu comme support de crédit.

5. Dispositif selon une des revendications précitées,
**caractérisé en ce que** le téléphone mobile (1) est réalisé comme unité de contrôle mobile pour le contrôle d'autorisations à l'aide du moyen de mémoire électronique (12).

6. Dispositif selon une des revendications précitées,
**caractérisé en ce que** le téléphone mobile (1) est réalisé, en liaison avec un calculateur de comptabilisation (10), pour comptabiliser des montants d'un support de crédit.

7. Dispositif selon une des revendications précitées,
**caractérisé en ce que** le moyen de mémoire électronique (12) est prévu pour déterminer l'identité de l'utilisateur.

8. Dispositif selon une des revendications précitées,
**caractérisé en ce que**, dans le moyen de mémoire électronique (12), d'autres fonctions de moyens de mémoire électroniques connus sont intégrées.

9. Dispositif selon une des revendications précitées,
**caractérisé en ce que** le moyen de mémoire électronique (12) est réalisé de plus comme carte de crédit.

10. Dispositif selon une des revendications précitées,
**caractérisé en ce que** le moyen de mémoire électronique (12) présente des capacités de mémoire pouvant être librement occupées.
